# EUROPÄISCHE PATENTSCHRIFT

(11) **EP 1 058 776 B1**
(45) Veröffentlichungstag und Bekanntmachung des Hinweises auf die Patenterteilung: **12.05.2004**
(21) Anmeldenummer: 98954490.3
(22) Anmeldetag: 05.11.1998
(51) Int. Cl.: F01M 11/03

(54) **FILTERANORDNUNG**
FILTER ARRANGEMENT
SYSTEME DE FILTRE

(30) Priorität: 23.12.1997 DE 19757759
(43) Veröffentlichungstag der Anmeldung: 13.12.2000
(73) Patentinhaber: Mann + Hummel GmbH, 71638 Ludwigsburg (DE)
(72) Erfinder: JAINEK, Herbert, D-74074 Heilbronn (DE)
(74) Vertreter: Voth, Gerhard, Dipl.-Ing.
(86) Internationale Anmeldenummer: PCT/EP1998/007068
(87) Internationale Veröffentlichungsnummer: WO 1999/034097

(56) Entgegenhaltungen:
- DE-A- 4 322 979
- DE-A- 19 547 440
- DE-A- 19 701 066
- US-A- 5 014 775

## Beschreibung

### Stand der Technik

Die Erfindung betrifft eine Filteranordnung mit einer Kühlvorrichtung für eine zu filternde Flüssigkeit, nach dem Oberbegriff des Hauptanspruchs.

Es ist beispielsweise eine Ölfilteranordnung für die Filtrierung des Schmieröls in einem Kraftfahrzeug aus der US-PS 5,014,775 bekannt, bei der das Öl zur Erreichung einer optimalen Betriebstemperatur gekühlt werden muss. Bei diesen bekannten Filteranordnungen strömt das zu filternde Öl durch die mehrschichtig aufgebaute Kühlvorrichtung zum Filterelement und nach dem Durchströmen des Filterelements wiederum durch die Kühlvorrichtung hindurch zum Auslass der Filteranordnung. Hierbei sind somit eine Vielzahl von Kanälen in der Kühlvorrichtung für das Öl und für die Kühlflüssigkeit vorhanden, die eine aufwendige Dichtungstechnik. insbesondere auch zum Gehäuse und den diversen Einund Auslässen der Filteranordnung notwendig macht.

### Aufgabenstellung

Der Erfindung liegt die Aufgabe zugrunde, eine Filteranordnung der eingangs angegebenen Art so fortzubilden, dass eine einfache Herstellung und Aufbau erreichbar ist.

### Vorteile der Erfindung

Die erfindungsgemäße Filteranordnung ist in vorteilhafter Weise als Weiterbildung der gattungsgemäßen Art, bei der eine zu filternde Flüssigkeit durch eine Filterpatrone und eine Kühlvorrichtung strömt, so ausgebildet, dass die zu filternde Rohflüssigkeit beim Eintritt in das Filterelement in einen Kanal geleitet ist, der durch einen Zwischenraum zwischen der Kühlvorrichtung und der Wand der Filteranordnung ausgebildet ist und von dort außen vorbei an der Kühlvorrichtung an die Filterpatrone geführt ist. Die gefilterte Reinflüssigkeit wird hinter der Filterpatrone dann durch Kühlkanäle in der Kühlvorrichtung aus der Filteranordnung heraus geführt.

Diese Ausbildung der Filteranordnung ist vor allem deswegen vorteilhaft, da die zu filternde Rohflüssigkeit direkt in das Gehäuse der Filteranordnung geleitet werden und auf einfache Weise außen an der Kühlvorrichtung vorbeigeführt werden kann; es sind hier keine speziellen Dichtungen zwischen dem Einlass, dem Gehäuse und der Kühlvorrichtung notwendig. Die gefilterte Reinflüssigkeit kann dann durch entsprechende Kanäle durch die Kühlvorrichtung nach außen geführt werden, wobei die Kühlvorrichtung über entsprechende Anschlüsse mit einer fließenden Kühlflüssigkeit verbunden sein kann.

Ein vorteilhafte Anwendung der erfindungsgemäßen Filteranordnung ergibt sich, wenn die zu filternde Flüssigkeit das Motoröl für den Verbrennungsmotor eines Kraftfahrzeuges ist und die Kühlflüssigkeit aus dem Kühlkreislauf des Verbrennungsmotors entnehmbar ist.

### Zeichnung

Ein Ausführungsbeispiel der erfindungsgemäßen Filteranordnung wird anhand der Zeichnung erläutert. Es zeigen:
Figur 1 einen seitlichen Schnitt durch die Filteranordnung mit einer Kühlvorrichtung und
Figur 2 eine Ansicht auf die Anschlüsse der Filteranordnung nach Figur 1.

### Beschreibung des Ausführungsbeispiels

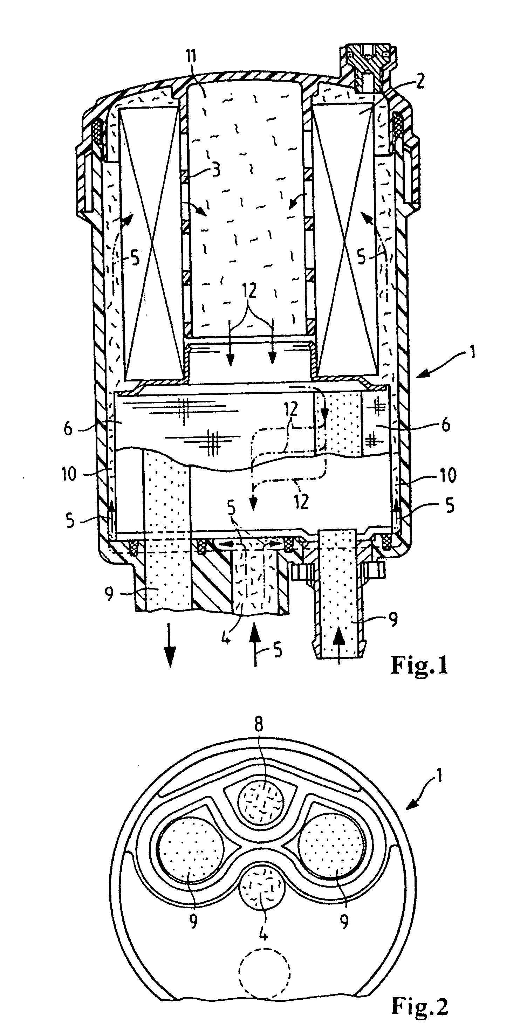

In Figur 1 ist eine Filteranordnung 1 mit einer Filterpatrone 2, die auf einem größtenteils offenen Mittelrohr 3 angeordnet ist, gezeigt. In das Gehäuse der Filteranordnung 1 strömt durch einen Einlass 4 ein zu filterndes Rohöl ein und verteilt sich im Gehäuse gemäß der Pfeile 5 in einem Ringkanal 10, der zwischen der Wand des Gehäuses und einer Kühlvorrichtung 6 gebildet ist. In diesem Ringkanal 10 strömt das Rohöl außen an der Kühlvorrichtung 6 vorbei an die radial außen liegenden Flächen der Filterpatrone 2 und durch diese hindurch in den inneren Bereich 11 des Mittelrohrs 3.

Das gefilterte Reinöl wird sodann gemäß der Pfeile 12 durch die mehrschichtig aufgebaute Kühlvorrichtung 6 zur Kühlung hindurch geleitet und kann gemäß der Pfeile 12 zu einem Auslass 8 (vgl. Figur 2) gelangen, über den das Reinöl aus der Filteranordnung 1 hinausströmt. Die Lage dieser Ein- und Auslässe ist aus Figur 2 deutlich zu entnehmen.

Die Einleitung des Külmediums, hier das Kühlwasser für den Verbrennungsmotor, in die zwischen den ölführenden Schichten angeordneten Kühlschichten der Kühlvorrichtung 6 erfolgt über Ein- und Auslässe 9, die sowohl aus der Figur 1 und der Figur 2 zu entnehmen sind.

### Bezugszeichenliste

- 1 =: Filteranordnung
- 2 =: Filterpatrone
- 3 =: Mittelrohr
- 4 =: Einlass für Rohöl
- 5 =: Pfeile (Strömung des Rohöls)
- 6 =: Kühlvorrichtung
- 7 =: Pfeile (Strömung des Reinöls)
- 8 =: Auslass für Reinöl
- 9 =: Ein-Auslass für Kühlflüssigkeit
- 10 =: Ringkanal
- 11 =: innerer Bereich des Mittelrohres 3
- 12 =: Pfeile (Strömung des Reinöls in der Kühlvorr.)

## Patentansprüche

1. Filteranordnung für eine zu filternde Flüssigkeit, mit
- einer Filterpatrone (2), wobei die zu filternde Flüssigkeit von radial außen durch die Filterpatrone (2) strömt und mit
- einer Kühlvorrichtung (6) für die Flüssigkeit, **dadurch gekennzeichnet, dass**
- die zu filternde Rohflüssigkeit beim Eintritt in die Filteranordnung (1) in einen Ringkanal (10) geleitet ist, der durch einen Zwischenraum zwischen der Kühlvorrichtung (6) und der Gehäusewand der Filteranordnung (1) ausgebildet ist, und von dort außen an die Filterpatrone (2) geführt ist und dass
- die gefilterte Reinflüssigkeit durch Kühlkanäle in der Kühlvorrichtung (6) aus der Filteranordnung (1) heraus geführt ist.

2. Filteranordnung nach Anspruch 1, **dadurch gekennzeichnet, dass**
- die Kühlvorrichtung (6) über entsprechende Anschlüsse (9) mit der fließenden Kühlflüssigkeit verbunden ist.

3. Anwendung der Filteranordnung nach einem der vorhergehenden Ansprüche, **dadurch gekennzeichnet, dass**
- die zu filternde Flüssigkeit das Motoröl für den Verbrennungsmotor eines Kraftfahrzeuges ist und die Kühlflüssigkeit aus dem Kühlkreislauf des Verbrennungsmotors entnehmbar ist.

## Claims

1. Filter arrangement for a liquid to be filtered, having
- a filter cartridge (2), the liquid to be filtered flowing radially from the outside through the filter cartridge (2), and having
- a cooling device (6) for the liquid, **characterised in that**
- on entry into the filter arrangement (1), the unfiltered liquid to be filtered is conducted into an annular channel (10), which is formed as an intermediate chamber between the cooling device (6) and the housing wall of the filter arrangement (1), and from there is guided on the outside to the filter cartridge (2) and **in that**
- the dean filtered liquid is guided out of the filter arrangement (1) through cooling channels in the cooling device (6).

2. Filter arrangement according to claim 1, **characterised in that**
- the cooling device (6) is connected to the flowing cooling liquid via corresponding connections (9).

3. Use of the filter arrangement according to one of the preceding claims, **characterised in that**
- the liquid to be filtered is the engine oil for the internal combustion engine of a motor vehicle and the cooling liquid is removable from the cooling circuit of the internal combustion engine.

## Revendications

1. Système de filtre destiné à un liquide à filtrer, comportant
- une cartouche de filtre (2), le liquide à filtrer s'écoulant radialement depuis l'extérieur à travers la cartouche de filtre (2) et
- un dispositif de refroidissement (6) pour le liquide,
**caractérisé en ce que**
- à son entrée dans le système de filtre (1), le liquide brut à filtrer est conduit dans un canal annulaire (10) formé par un espace intermédiaire entre le dispositif de refroidissement (6) et la paroi de boîtier du système de filtre (1) et lorsqu'il en sort est acheminé à la cartouche de filtre (2) et
- le liquide pur filtré est acheminé à l'extérieur du système de filtre (1) par des canaux de refroidissement dans le dispositif de refroidissement (6).

2. Système de filtre selon la revendication 1,
**caractérisé en ce que**
- le dispositif de refroidissement (6) est relié par des raccordements (9) correspondants à un liquide de refroidissement qui circule.

3. Utilisation du système de filtre selon l'une des revendications précédentes,
**caractérisé en ce que**
- le liquide à filtrer est l'huile à moteur pour le moteur à combustion interne d'un véhicule automobile et le liquide de refroidissement peut être soutiré du circuit de refroidissement du moteur à combustion interne.
